(19) Europäisches Patentamt
European Patent Office
Office européen des brevets

(11) **EP 4 079 683 A2**

(12) **EUROPEAN PATENT APPLICATION**
published in accordance with Art. 153(4) EPC

(43) Date of publication:
**26.10.2022 Bulletin 2022/43**

(21) Application number: **20903497.4**

(22) Date of filing: **07.12.2020**

(51) International Patent Classification (IPC):
**C01B 15/043** (2006.01)    **C01D 15/02** (2006.01)

(52) Cooperative Patent Classification (CPC):
**C01B 15/043**

(86) International application number:
**PCT/KR2020/017783**

(87) International publication number:
**WO 2021/125655 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2019 KR 20190172033**

(71) Applicants:
• **POSCO**
**Pohang-si, Gyeongsangbuk-do 37859 (KR)**
• **RESEARCH INSTITUTE OF INDUSTRIAL SCIENCE & TECHNOLOGY**
**Pohang-si, Gyeongsangbuk-do 37673 (KR)**

(72) Inventors:
• **LEE, Jae Myung**
**Pohang-si, Gyeongsangbuk-do 37673 (KR)**
• **AHN, Jun-Kyu**
**Pohang-si, Gyeongsangbuk-do 37641 (KR)**
• **JUNG, Woo Chul**
**Pohang-si, Gyeongsangbuk-do 37656 (KR)**
• **JEUNG, Kee Uek**
**Pohang-si, Gyeongsangbuk-do 37656 (KR)**
• **PARK, Jung Kwan**
**Pohang-si, Gyeongsangbuk-do 37566 (KR)**
• **KIM, Sang Won**
**Pohang-si, Gyeongsangbuk-do 37655 (KR)**

(74) Representative: **Potter Clarkson**
**The Belgrave Centre**
**Talbot Street**
**Nottingham NG1 5GG (GB)**

(54) **METHOD FOR CONTROLLING PARTICLE SIZES OF LITHIUM PEROXIDE AND METHOD FOR PREPARING PARTICLE SIZE-CONTROLLED LITHIUM OXIDE**

(57)    The present invention relates to a novel method for preparing lithium oxide. In the present invention, the particle size and shape of lithium oxide may be controlled during the preparing process. In addition, the present invention relates to lithium oxide with controlled particle size and shape prepared by this preparing method.

FIG. 1

**Description**

**CROSS-REFERENCE TO RELATED APPLICATION**

This application claims priority to and the benefit of Korean Patent Application No. 10-2019-0172033 filed in the Korean Intellectual Property Office on December 20, 2019, the entire contents of which are incorporated herein by reference.

**BACKGROUND OF THE INVENTION**

**(a) Field of the Invention**

The present invention relates to a novel method for preparing lithium oxide. In the present invention, the particle size of lithium oxide may be controlled during the preparing method. In addition, the present invention relates to lithium oxide having a controlled particle size prepared by such a preparing method.

**(b) Description of the Related Art**

Recently, expensive, high-purity lithium oxide ($Li_2O$) has been used as a raw material for the synthesis of over-lithiated transition metal oxide. Over-lithiated transition metal oxide is used as a positive electrode additive (or an over-discharge inhibitor) for improving an irreversible capacity of a lithium ion battery or as a highly reactive lithium raw material in a lithiation treatment for a negative electrode material. Overlithium metal oxide is synthesized by mixing the metal oxide and lithium oxide and then heat treatment in an inert atmosphere.

Conventionally, a number of methods for preparing lithium oxide are known. As an example, lithium oxide has been prepared by oxidizing metallic lithium by adjusting $H_2O$ and $CO_2$ at a temperature of greater than or equal to 250 °C in a dry atmosphere. This method has the advantage that the reaction is fast, but there is a disadvantage that liquid Li is adsorbed to a reaction crucible, and a process of controlling $H_2O$ and $CO_2$ in the reaction is required.

In the method of preparing lithium oxide by decomposing lithium hydroxide, lithium hydroxide is decomposed according to the following reaction scheme at a temperature of greater than or equal to 700 °C under vacuum or at a temperature of 200 °C to 300 °C under vacuum to obtain liquid lithium hydroxide, which is then decomposed again to obtain lithium oxide.

$$LiOH\text{-}H_2O(s) \rightarrow LiOH(s);\ 2LiOH(L) \rightarrow Li_2O(s) + H_2O(g)\ \text{or}\ 2LiOH(s) \rightarrow Li_2O(s) + H_2O(g)$$

When the reaction proceeds at a temperature of greater than or equal to 700 °C, there is an advantage that the reaction is fast, but there is also a disadvantage that liquid Li is adsorbed in a reaction crucible and it is difficult to control $CO_2$ during the reaction. When the reaction proceeds at a temperature of 200 °C to 300 °C, there is an advantage that a low reaction temperature is required, but there is a disadvantage that a high vacuum state is required for the reaction.

In the method of preparing lithium oxide by the lithium hydroxide wet conversion method, lithium peroxide has been obtained according to the following reaction scheme at room temperature, and then decomposed again to obtain lithium oxide.

$$2LiOH\text{-}xH_2O(s) \rightarrow Li_2O_2(s);\ Li_2O_2(s) \rightarrow Li_2O(s) + 1/2O_2(g)$$

This method has the advantage that a low reaction temperature is required, but there is a disadvantage that reagents such as $H_2O_2$ and MeOH are required.

In the method of preparing lithium oxide by the lithium carbonate decomposition method, the reaction proceeds at a temperature of greater than or equal to 900 °C in a low $PCO_2$ atmosphere according to the reaction scheme $Li_2CO_3(s) \rightarrow Li_2O(s) + CO_2(g)$. The raw material cost is low but there is a disadvantage that the reaction rate is slow and a high temperature of greater than or equal to 1200 °C is required for practical use.

In the method of preparing lithium oxide by the lithium nitrate decomposition method, the reaction proceeds at a temperature of greater than or equal to 900 °C according to the reaction scheme $2LiNO_3(s) \rightarrow Li_2O(s) + 2NO_2(g) + 1/2O_2(g)$. The reaction rate is fast but there is a disadvantage in that raw materials are expensive and a NOx removal process is involved.

Since the method of preparing lithium oxide from metallic lithium, the lithium hydroxide decomposition method, the lithium carbonate decomposition method, and the lithium nitrate decomposition method proceed at a temperature above melting points of the raw materials, lithium oxide is synthesized in a form of a large lump regardless of the particle size of the raw material powders. Therefore, in order to be used as raw materials for the synthesis of over-lithiated transition metal oxide, a process of pulverizing/classifying the produced lithium oxide lump as a subsequent process is required. In addition, loss of powder occurs in the pulverizing/classifying process for controlling the particle size, and there is a difficulty in shielding the atmosphere. Furthermore, it is very difficult to control the final particle size of the powder produced in this way.

## SUMMARY OF THE INVENTION

In order to improve a reaction yield in the synthesis reaction, the present inventors found that it is desirable that the lithium oxide has a spherical shape and a uniform particle size distribution, and that it is very important to control a ratio of average diameters of lithium oxide to metal oxide. In addition, for this purpose, a method of preparing lithium oxide capable of controlling a particle size of the lithium oxide produced has been developed.

In the present invention, a two-step lithium hydroxide wet conversion method is used to prepare lithium oxide. In the first step, lithium hydroxide is reacted with hydrogen peroxide water to synthesize $Li_2O_2$ as an intermediate material, and in the second step, the synthesized $Li_2O_2$ is decomposed at a high temperature in an inert atmosphere to convert it into lithium oxide ($Li_2O$).

1st step: $2LiOH-xH_2O + H_2O_2 -> Li_2O_2 + yH_2O$, x is an integer of 0 or more.
2nd step: $Li_2O_2 -> Li_2O + 1/2O_2(g)$

In the second step, while the intermediate product $Li_2O_2$ is converted to $Li_2O$, the diameter of $Li_2O_2$ decreases by about 10% to 40%, but $Li_2O$ having the same shape as the intermediate product is synthesized. Therefore, the size of the target diameter of the spherical $Li_2O$ may be obtained by controlling the particle size of the $Li_2O_2$ intermediate material.

## BRIEF DESCRIPTION OF THE DRAWINGS

FIG. 1 is a flow chart of a two-step process of the present invention.
FIG. 2 is an SEM photograph of $Li_2O_2$ powder prepared according to the present invention.
FIG. 3 shows a graph of a relationship between the particle size of $Li_2O_2$ prepared according to the present invention and a linear velocity of the reactor.
FIG. 4 is a graph showing a relationship between the particle size of $Li_2O_2$ prepared according to the present invention and a linear velocity of the reactor.
FIG. 5 is a graph showing a relationship between the particle size of $Li_2O_2$ prepared according to the present invention and a linear velocity of the reactor.
FIG. 6 shows SEM photographs of $Li_2O$ prepared according to the present invention.
FIG. 7 shows XRD results of $Li_2O$ powder prepared according to the present invention.
FIG. 8 shows XRD results of $Li_2O$ powder prepared according to the present invention.
FIG. 9 shows XRD results of $Li_2O$ powder prepared according to the present invention.
FIG. 10 shows XRD results of $Li_2O$ powder prepared according to the present invention.
FIG. 11 is a graph showing a relationship between the particle size of $Li_2O$ prepared according to the present invention and a linear velocity of the reactor.
FIG. 12 is a graph showing a relationship between the particle size of $Li_2O$ prepared according to the present invention and a linear velocity of the reactor.
FIG. 13 is a graph showing a relationship between the particle size of Li2O prepared according to the present invention and a linear velocity of the reactor.
FIG. 14 shows SEM photographs of $Li_2O$ powders prepared according to the present invention.
FIG. 15 shows SEM photographs of $Li_2NiO_2$ powders prepared according to the present invention.
FIG. 16 is a view illustrating a charge/discharge relationship of three coin cells manufactured according to the present invention.

## DETAILED DESCRIPTION OF THE EMBODIMENTS

In the present invention, lithium oxide is produced by a two-step lithium hydroxide wet conversion method. The lithium oxide of the present invention is produced by producing lithium peroxide in the first step and decomposing it with oxygen in the second step. The shapes of the resulting lithium oxide particles are the same as the shapes of the intermediate product, lithium peroxide particles, but the particle sizes thereof may be decreased to about 50% to 80%, desirably about 60% to 75%, and more desirably about 65% to 70%. Accordingly, by controlling the shapes, sizes, particle sizes, or diameters of the particles of lithium peroxide, desired shapes, sizes, particle sizes, or diameters of lithium oxide may be obtained.

In the first step, lithium hydroxide is dissociated in an aqueous solution to generate lithium ions, which react with hydrogen peroxide to synthesize lithium peroxide ($Li_2O_2$) and then precipitate it. When synthesizing lithium peroxide, it is possible to control the particle sizes of the generated lithium peroxide particles by controlling a collision rate and collision energy between the generated particles. The collision energy between particles varies depending on an internal shape of the reactor, a flow phenomenon of the reactants, and a moving speed of the solution, and as a leading variable, a tip velocity of the stirrer may be defined and controlled as follows.

Tip velocity: V_tip = 2pi $\times$ R_impellor * (RPM)/60

The lithium oxide preparing process of the present invention includes a two-step reaction of the following lithium hydroxide raw material wet reaction and an inert atmosphere high-temperature decomposition reaction.

1st step : $2LiOH \cdot xH_2O + H_2O_2 \rightarrow Li_2O_2 + yH_2O$, x is an integer of 0 or more.
2nd step : $Li_2O_2 \rightarrow Li_2O + 1/2O_2(g)$

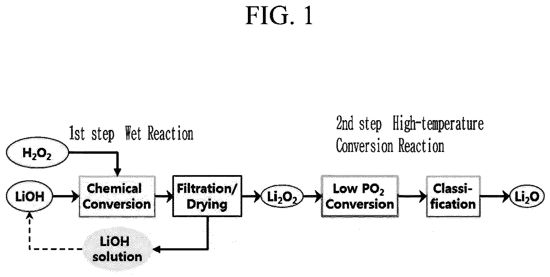

A flow chart of the two-step process of the present invention is shown in FIG. 1.

In each of the above steps, it is desirable to maintain an inert atmosphere in order to prevent contamination by moisture and $CO_2$ in the atmosphere and promote material conversion.

**1) Step**

**1-1) Mixing of Raw Materials**

In this step, a lithium raw material including lithium hydroxide monohydrate or lithium hydroxide and hydrogen peroxide water are mixed. A theoretical reaction ratio of lithium hydroxide and hydrogen peroxide water may be an equivalent ratio of lithium : hydrogen peroxide of 2:1, but the ratio may be controlled to improve a reaction yield. A desirable reaction equivalent ratio may be a ratio of lithium hydroxide to hydrogen peroxide of 4:1 to 1:1.

As a starting raw material, lithium hydroxide monohydrate ($LiOH \cdot H_2O$), lithium hydroxide anhydride (LiOH), or lithium hydroxide polyhydrate ($LiOH \cdot xH_2O$) may be used. In order to improve a reaction yield, it is desirable to use lithium hydroxide anhydride.

Hydrogen peroxide may be used as an aqueous solution ($H_2O_2 \cdot zH_2O$, z is an integer greater than or equal to 0). In order to improve a reaction yield, it is desirable to use pure hydrogen peroxide, but it is desirable to use an aqueous solution of 35% concentration in terms of storage and safety.

**1-2) Precipitation of Intermediate Materials and Controlling Particle Size by Stirring the Reactor Impeller**

By controlling the shape of the reactor, the shape and lengths (dimensions) of the internal baffles and impellers, the number of rotations of the impeller, and the reactor temperature, the particle size of the produced $Li_2O_2$ intermediate material may be controlled. In general, as the number of rotations of the impeller increases, the average size of the particles decreases and the shape is formed into particles that are close to a spherical shape.

As the reactor temperature becomes higher, the average particle size becomes larger, and the shape changes from spherical to amorphous. The lower the reactor temperature, the smaller the average particle size, and the shape changes from amorphous to a spherical shape.

The reaction time is 1 minute or more, desirably 30 minutes to 90 minutes after the raw materials are added. Although it is not necessary to adjust the temperature of the reactor, it is desirable to adjust it within the range of 30 °C to 60 °C in order to control the reaction rate.

When synthesizing lithium peroxide, it is possible to control the particle sizes of the generated lithium peroxide particles by controlling a collision rate and collision energy between the generated particles. The collision energy between particles varies depending on an internal shape of the reactor, a flow phenomenon of the reactants, and a moving speed of the solution, and as a leading variable, a tip velocity of the stirrer may be defined and controlled as follows.

Tip velocity: V_tip = 2pi $\times$ R_impellor * (RPM)/60

In the above equation, pi means a circumference (3.141592...), R_impellor means a radius of the stirrer blade, and RPM means the number of revolutions per minute of the stirrer blade.

In the present invention, R_impellor is limited by the shape of the reactor and an operation range of the motor, and a person of ordinary skill in the art may determine the value in consideration of the motor specification according to the target tip velocity.

In the present invention, the tip velocity of the stirrer is 0.2 m/sec. to 20 m/sec., desirably 1 m/sec. to 10 m/sec.

In the present invention, the tip velocity is inversely proportional to the size of the generated particles, which means that the faster the tip velocity, the smaller the size of the particles.

### 1-3) Recovering and Drying of the Prepared Slurry Precipitate

An intermediate material slurry is prepared by stirring the impeller in the reactor. The prepared slurry may be separated into a solution and a solid by a method such as precipitation, passing through a filter, or centrifugation. The recovered solution is a lithium hydroxide aqueous solution in which an excess of lithium is dissolved, and may be used to prepare a lithium compound. The recovered $Li_2O_2$ solids may be dried by vacuum to dry the surface adsorbed water.

The $Li_2O_2$ particles prepared in the above step are close to or nearly spherical, or spherical. The particle size of the lithium peroxide produced is in the range of 1 $\mu$m to 130 $\mu$m, desirably in the range of 5 $\mu$m to 50 $\mu$m.

### 2) Step

### 2-1) Heat Treatment in Inert Atmosphere

The solid prepared in step 1) is $Li_2O_2$, which can be converted into $Li_2O$ in an inert atmosphere or at a high temperature in a vacuum atmosphere. A conversion temperature is greater than or equal to 300 °C, desirably 350 °C to 650 °C. A conversion time (reaction time) depends on the conversion temperature (reaction temperature), and the conversion time and conversion temperature are inversely proportional. The inverse proportion between the conversion time and the conversion temperature means that the longer the conversion time in the same reaction, the lower the conversion temperature is. In an embodiment, the conversion time is greater than or equal to 10 minutes, desirably greater than or equal to 30 minutes, more desirably greater than or equal to 1 hour, even more specifically 30 minutes to 3 hours, or 1 hour to 2 hours. When the conversion temperature is 420 °C, the conversion time is desirably greater than or equal to 30 minutes.

The particle shape of the produced lithium oxide is the same as the shape of the lithium peroxide particle, which is an intermediate product in step 1), but the particle size (particle size, diameter) is decreased into about 50% to 80%, desirably about 60% to 75%, and more desirably about 65% to 70%. The particle size of the lithium oxide produced in this step may be determined by the following equation:

(Lithium oxide particle size) = a $\times$ exp(b $\times$ Tip velocity), wherein a and b are process constants
wherein, in the above equation, a and b are engineering constant values, 20<a<60, and -0.3<b<-0.1.

In the above equation, a is a parameter for explaining an effect of tip velocity on the particle size from an energy point of view, and increases as the number of collisions and energy increase at the same tip velocity. The a value may be a parameter of the number of baffles and the cross-sectional area of baffle which have an effect on the particle size, and the detailed value thereof may vary depending on various factors such as viscosity of the solution, particle size, and temperature. A person of ordinary skill in the art may determine the value of a within the above range in consideration of such process conditions.

The b value is a parameter that explains an influence of tip velocity on particle size in terms of particle pulverization and regrowth activation energy, and varies depending on particle defect energy and recrystallization energy relative to the same tip velocity. The detailed value may vary depending on various factors such as concentration of the solution, temperature, type of material, and content of impurities. A person of ordinary skill in the art may determine the b value within the above range in consideration of these process conditions.

### 2-2) $Li_2O$ Powder Recovering and Packaging

The converted $Li_2O$ may be filled with nitrogen and vacuum-packed to prevent denaturation in the atmosphere. In particular, when $Li_2O$ comes into contact with moisture and $CO_2$ in the atmosphere at the same time, it may be denatured into lithium hydroxide and lithium carbonate, so care is required for storage.

The $Li_2O$ particles prepared in the above step are close to or nearly spherical, or spherical. The particle size of lithium oxide is in the range of 1 $\mu$m to 100 $\mu$m, and desirably in the range of 5 $\mu$m to 50 $\mu$m.

Hereinafter, embodiments of the present invention will be described in more detail through the following examples. However, this is presented as the examples, and the present invention is not limited thereby, and the present invention is only defined by the scope of the claims to be described later.

**Examples**

**Example 1**

3 kg of reagent grade lithium hydroxide monohydrate (98%, Samjeon Chemical Co., Ltd.) and 3.4 kg of hydrogen peroxide water (34.5%, Samjeon Chemical Co., Ltd.) were mixed in the reactor. Four rectangular baffles were installed inside the reactor, and the reactor rotor was composed of a dual structure. Mechanical impeller was reacted for 1 hour while rotating at 150 to 750 rpm. About 1.2 kg of off-white slurry was collected and passed through a cone-type filter dryer equipped with a metal filter to separate solid and liquid. 1.7 kg of wet $Li_2O_2$ powder and 4.7 kg of aqueous solution were recovered. After storing the wet $Li_2O_2$ powders in a vacuum drying oven at 130 °C for 3 hours, 1.2 kg of the dried $Li_2O_2$ powders were recovered. As a result of XRD phase analysis, it was analyzed as 98.5% of $Li_2O_2$, 1.3% of $Li_2CO_3$, and 0.2% of $LiOH-H_2O$. $Li_2CO_3$ is estimated to be produced by $CO_2$ in the atmosphere during transport and XRD measurements.

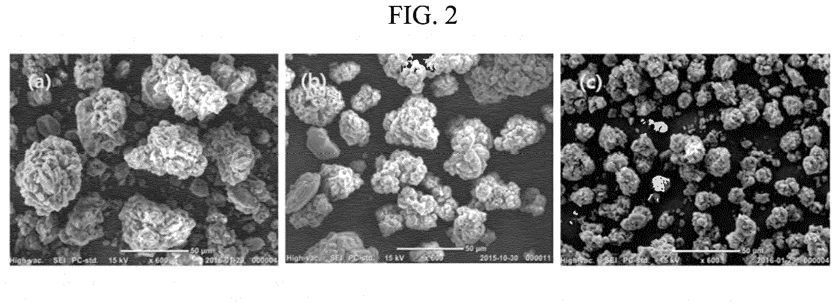

The SEM photographs of the recovered $Li_2O_2$ powders are shown in FIG. 2. As shown in FIG. 2, as the RPM increases, the size of the particles decreases.

The average particle size D50 was measured to be about $50\pm20$ $\mu$m at 150 rpm, about $30\pm15$ $\mu$m at 500 rpm, and about $20\pm10$ $\mu$m at 750 rpm.

**Example 2**

5.2 kg of reagent grade lithium hydroxide monohydrate (98%, Samjeon Chemical Co., Ltd.) and 6.0 kg of hydrogen peroxide water (34.5%, Samjeon Chemical Co., Ltd.) were mixed in the reactor. Four rectangular baffles were installed inside the reactor, and the reactor rotor was composed of a dual structure. The mixture was reacted by rotating a mechanical impeller at 150 rpm to 750 rpm for 1 hour. About 11.2 kg of off-white slurry was collected and passed through a cone-type filter dryer equipped with a metal filter to separate solid and liquid. 2.5 kg of wet $Li_2O_2$ powders and 8.7 kg of aqueous solution were recovered. After storing the wet $Li_2O_2$ powders in a vacuum drying oven at 130 °C for 3 hours, 2.1 kg of the dried $Li_2O_2$ powders were recovered. As a result of XRD phase analysis, it was analyzed as 98.5% of $Li_2O_2$, 1.3% of $Li_2CO_3$, and 0.2% of $LiOH-H_2O$.

The relationship between the particle size of $Li_2O_2$ prepared by the synthesis methods of Examples 1 and 2 and the linear velocity of the reactor during the synthesis reaction is summarized in the following table.

(Table 1)

| rpm | $LiOH-H_2O$ (98.5%) [kg] | $H_2O_2$ (34.5%) [kg] | T. velocity [m/sec] | $H_2O_2$ addition method and reaction time min | $Li_2O_2$ D50 [$\mu$m] |
|---|---|---|---|---|---|
| 150 | 3 | 3.4 | 0.982 | quantitative addition (15 min)+(60 min reaction) | 50 |
| 500 | 3 | 3.4 | 3.272 | quantitative addition (15 min)+(60 min reaction) | 30 |
| 750 | 3 | 3.4 | 4.909 | quantitative addition (15 min)+(60 min reaction) | 20 |
| 750 | 5.2 | 6 | 4.909 | quantitative addition after 2 kg addition (15 min) + (60 min reaction) | 25 |
| 750 | 5.2 | 6 | 4.909 | quantitative addition (40 min) + (60 min reaction) | 20 |

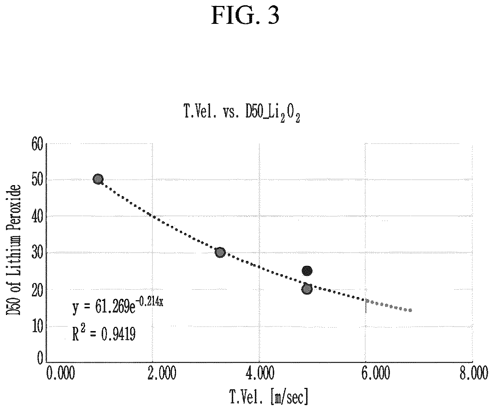

Based on the table, the relationship between the diameter of $Li_2O_2$ synthesized according to Examples 1 and 2 and the linear velocity of the reactor during the synthesis reaction is shown as a graph in FIG. 3.

**Example 3**

30 kg of reagent grade lithium hydroxide monohydrate (98%, Samjeon Chemical Co., Ltd.) and 32 kg of hydrogen peroxide water (34.5%, Samjeon Chemical Co., Ltd.) were mixed in the reactor. Four rectangular baffles were installed inside the reactor, and the reactor rotor was composed of a dual structure. The mixture was reacted by rotating a mechanical impeller for 1 hour at 150 rpm to 500 rpm. About 12.7 kg of off-white slurry was collected and passed through a cone-type filter dryer equipped with a metal filter to separate solid and liquid. 14 kg of wet $Li_2O_2$ powder and 48 kg of aqueous solution were recovered. After storing the wet $Li_2O_2$ powders in a vacuum drying oven at 130 °C for 3 hours, 12.7 kg of the dried $Li_2O_2$ powders were recovered. As a result of XRD phase analysis, it was analyzed as 98.5% or greater of $Li_2O_2$.

The relationship between the particle size of $Li_2O_2$ prepared by the synthesis method of Example 3 and the linear velocity of the reactor during the synthesis reaction is summarized in the following table.

(Table 2)

| rpm | LiOH-H$_2$O (98.5 %) | H$_2$O$_2$ (34.5 %) | T. velocity | H$_2$O$_2$ addition method and reaction time | Li$_2$O$_2$ |
|---|---|---|---|---|---|
| | [kg] | [kg] | [m/sec] | min | D50 [μm] |
| 150 | 30 | 32 | 1.689 | quantitative addition (5 min)+(60 min reaction), 40 °C | 40.3 |
| 200 | 30 | 32 | 2.251 | quantitative addition (5 min)+(60 min reaction), 40 °C | 32.1 |
| 250 | 30 | 32 | 2.814 | quantitative addition (5 min)+(60 min reaction), 40 °C | 28.9 |
| 300 | 30 | 32 | 3.377 | quantitative addition (5 min)+(60 min reaction), 40 °C | 27.2 |
| 350 | 30 | 32 | 3.940 | quantitative addition (5 min)+(60 min reaction), 40 °C | 22.7 |
| 400 | 30 | 32 | 4.503 | quantitative addition (5 min)+(60 min reaction), 40 °C | 19.5 |
| 450 | 30 | 32 | 5.066 | quantitative addition (5 min)+(60 min reaction), 40 °C | 19.5 |
| 500 | 30 | 32 | 5.629 | quantitative addition (5 min)+(60 min reaction), 40 °C | 14.9 |
| 500 | 45 | 50 | 5.629 | quantitative addition (5 min)+(60 min reaction), 40 °C | 17.0 |
| 500 | 60 | 64 | 5.629 | quantitative addition (5 min)+(60 min reaction), 40 °C | 17.2 |
| 500 | 30 | 32 | 5.629 | quantitative addition (5 min)+(60 min reaction), 50 °C | 15.3 |
| 500 | 30 | 32 | 5.629 | quantitative addition (5 min)+(60 min reaction), 30 °C | 15.8 |

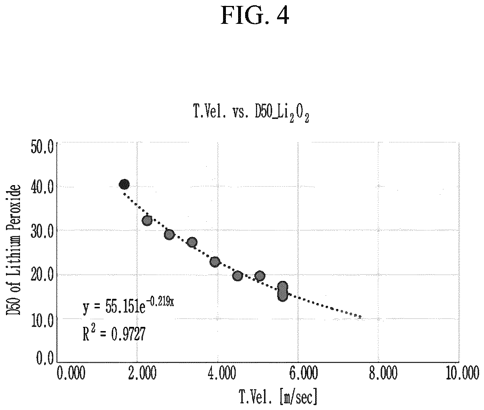

Based on the table, the relationship between the diameter of $Li_2O_2$ synthesized according to Example 3 and the linear velocity of the reactor during the synthesis reaction is shown as a graph in FIG. 4.

**Result Analysis of Example 1-3**

As a data analysis result of Examples 1 to 3, regardless of a reactor size, the tip velocity and the average diameter (D50) of $Li_2O_2$ had the following relationship.

(Table 3)

| rpm | LiOH-H$_2$O (98. 5%) | H2O$_2$ (34. 5%) | T. velocity | H$_2$O$_2$ addition method and reaction time | Li$_2$O$_2$ | Li$_2$O |
|---|---|---|---|---|---|---|
| | [kg] | [kg] | [m/sec] | min | D50 [μm] | D50 [μm] |
| 150 | 3 | 3.4 | 0.981747704 | quantitative addition (15 min)+(60 min reaction) | 48.5 | 32.8 |
| 500 | 3 | 3.4 | 3.272492347 | quantitative addition (15 min)+(60 min reaction) | 29.3 | 20.4 |
| 750 | 3 | 3.4 | 4.908738521 | quantitative addition (15 min)+(60 min reaction) | 19.4 | 13.5 |
| 750 | 5.2 | 6 | 4.908738521 | quantitative addition after 2 kg addition (15 min) + (60 min reaction | 19.5 | 13.3 |
| 750 | 5.2 | 6 | 4.908738521 | quantitative addition (40 min) + (60 min reaction) | 19.9 | 13.4 |
| 150 | 30 | 32 | 1.688606051 | quantitative addition (5 min)+(60 min reaction), 40 °C | 40.3 | 28.6 |
| 200 | 30 | 32 | 2.251474735 | quantitative addition (5 min)+(60 min reaction), 40 °C | 32.1 | 19.5 |
| 250 | 30 | 32 | 2.814343419 | quantitative addition (5 min)+(60 min reaction), 40 °C | 28.9 | 20.5 |
| 300 | 30 | 32 | 3.377212103 | quantitative addition (5 min)+(60 min reaction), 40 °C | 27.2 | 18.5 |
| 350 | 30 | 32 | 3.940080786 | quantitative addition (5 min)+(60 min reaction), 40 °C | 22.7 | 15.5 |
| 400 | 30 | 32 | 4.50294947 | quantitative addition (5 min)+(60 min reaction), 40 °C | 19.5 | 13.0 |
| 450 | 30 | 32 | 5.065818154 | quantitative addition (5 min)+(60 min reaction), 40 °C | 19.5 | 13.6 |
| 500 | 30 | 32 | 5.628686838 | quantitative addition (5 min)+(60 min reaction), 40 °C | 14.9 | 10.5 |
| 500 | 45 | 50 | 5.628686838 | quantitative addition (5 min)+(60 min reaction), 40 °C | 17.0 | 10.6 |
| 500 | 60 | 64 | 5.628686838 | quantitative addition (5 min)+(60 min reaction), 40 °C | 17.2 | 10.9 |
| 500 | 30 | 32 | 5.628686838 | quantitative addition (5 min)+(60 min reaction), 50 °C | 15.3 | 10.6 |
| 500 | 30 | 32 | 5.628686838 | quantitative addition (5 min)+(60 min reaction), 30 °C | 15.8 | 10.7 |

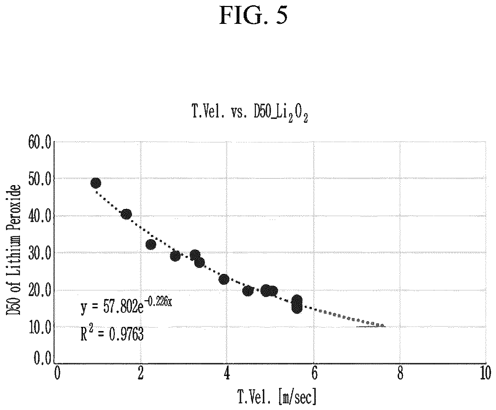

Based on the table, the relationship between the diameter of Li$_2$O$_2$ synthesized according to Example 3 and the linear velocity of the reactor during the synthesis reaction is shown as a graph in FIG. 5.

**Example 4: Conversion of Li$_2$O$_2$ to Li$_2$O**

10 g of dried Li$_2$O$_2$ powders were put in an alumina crucible and then, exposed in a nitrogen atmosphere furnace at 425 °C for 7 hours. The powders were recovered to obtain 6.5 g of Li$_2$O.

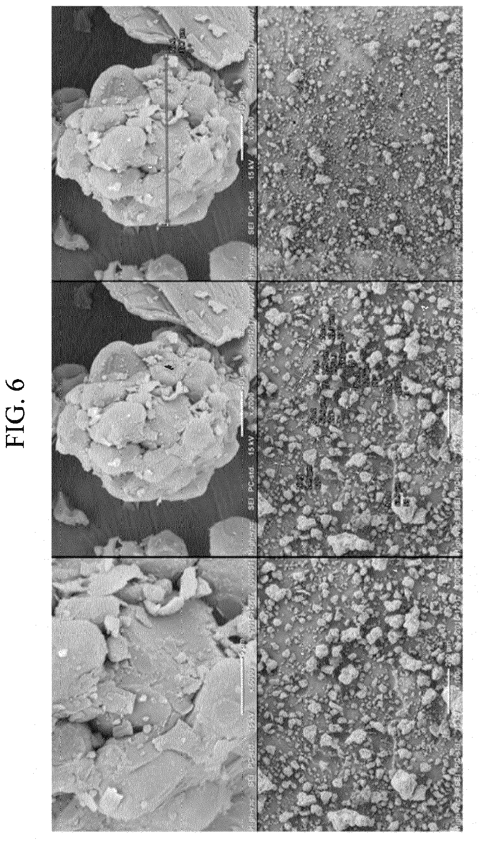

The obtained Li$_2$O was examined with respect to a shape by using SEM. FIG. 6 shows SEM images of the obtained Li$_2$O. The shape, as shown in FIG. 6, is spherical.

10 g of the dried $Li_2O_2$ powders were put in an alumina crucible and then, exposed in a nitrogen atmosphere furnace at 400 °C for 1 hour and 30 minutes and thus converted into $Li_2O$. 91.2% of $Li_2O_2$ in total was converted into $Li_2O$, and a portion of LiOH was found. The recovered $Li_2O$ was 6.8 g.

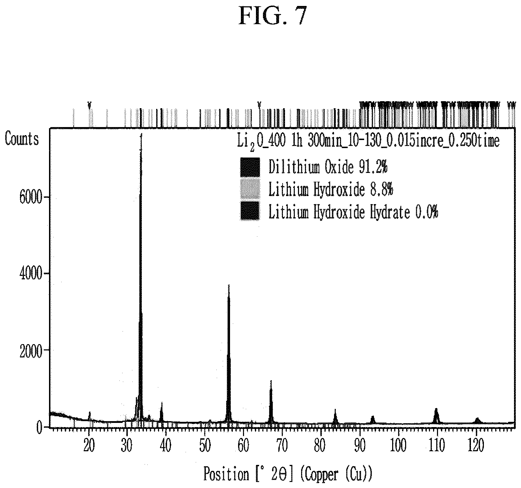

An XRD result of the recovered powders is shown in FIG. 7.

10 g of the dried $Li_2O_2$ powders were put in an alumina crucible and exposed in a nitrogen atmosphere furnace at 600 °C for 1 hour and 30 minutes and thus converted into $Li_2O$. The recovered $Li_2O$ was 6.5 g.

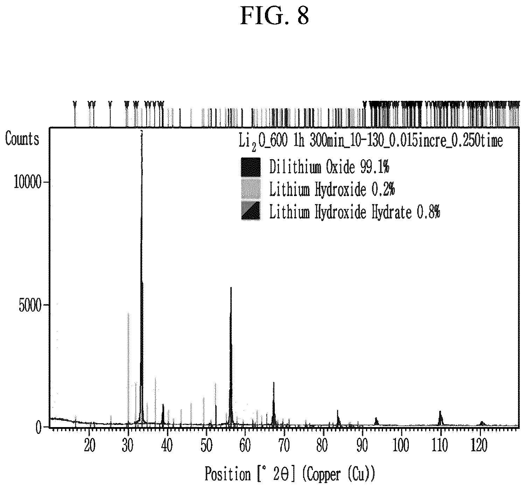

An XRD result of the obtained powder is shown in FIG. 8.

10 g of the dried $Li_2O_2$ powders were put in an alumina crucible and then, exposed at 700 °C in a nitrogen atmosphere furnace for 14 hours and thus converted into $Li_2O$. The recovered $Li_2O$ was 6.5 g.

10 g of the dried $Li_2O_2$ powders were put in an alumina crucible and then, exposed in a nitrogen atmosphere furnace at 750 °C for 12 hours and thus converted into $Li_2O$. The recovered $Li_2O$ was 6.5 g.

10 g of the dried $Li_2O_2$ powders was put in an alumina crucible and then, exposed in a nitrogen atmosphere furnace for 3 hours at 425 °C and then, at 950 °C for 1 hour and thus converted into $Li_2O$. The recovered $Li_2O$ was 6.5 g.

10 g of the dried $Li_2O_2$ powders were put in an alumina crucible and then, exposed in a nitrogen atmosphere furnace at 425 °C for 3 hours and then, 950 °C for 2 hours and thus converted into $Li_2O$. The recovered $Li_2O$ was 6.5 g.

500 g of the dried $Li_2O_2$ powders were put in an alumina crucible and then, exposed in a nitrogen atmosphere furnace at 425 °C for 3 hours to recover $Li_2O$. The recovered powders were 320 g.

10 g of the dried $Li_2O_2$ powders were put in an alumina crucible and then, exposed in an electric furnace at 600 °C for 1 hour 30 minutes to recover $Li_2O$. Oxygen with high purity (99.98%) 200 cc/min and nitrogen with high purity (99.98%) were supplied at 800 cc/min. The recovered powders were 6.5 g.

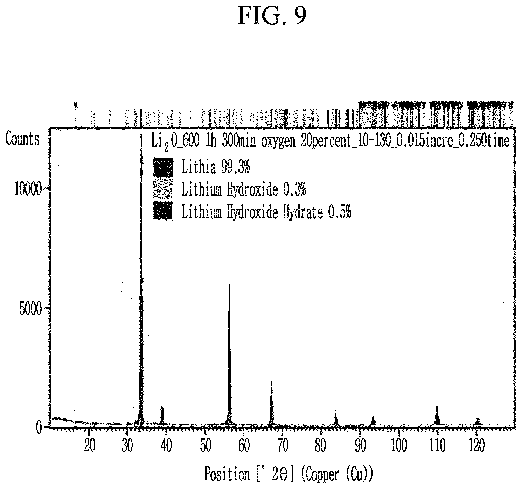

An XRD result of the prepared powder is shown in FIG. 9.

10 g of the dried $Li_2O_2$ powders were put in an alumina crucible and exposed in an electric furnace at 600 °C for 1 hour 30 minutes to recover $Li_2O$. Oxygen with high purity (99.98%) 200 cc/min and nitrogen with high purity (99.98%) were supplied at 800 cc/min. The recovered powders were 6.5 g.

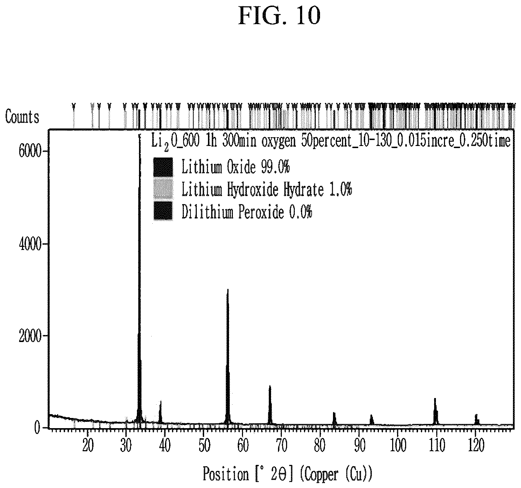

An XRD result of the prepared powder is shown in FIG. 10.

The relationship of the diameters of $Li_2O_2$ and $Li_2O$ in Example 4 and the linear velocity of the reactor during the synthesis reaction is shown in Table 4.

(Table 4)

| rpm | LiO H-H$_2$O (98.5%) | H2O$_2$ (34.5%) | T. velocity | H$_2$O$_2$ addition method and reaction time | Li$_2$O$_2$ | Li$_2$O |
|---|---|---|---|---|---|---|
| | [kg] | [kg] | [m/sec] | min | D50 [μm] | D50 [μm] |
| 150 | 3 | 3.4 | 0.981747704 | quantitative addition (15 min)+(60 min reaction) | 48.5 | 32.8 |
| 500 | 3 | 3.4 | 3.272492347 | quantitative addition (15 min)+(60 min reaction) | 29.3 | 20.4 |
| 750 | 3 | 3.4 | 4.908738521 | quantitative addition (15 min)+(60 min reaction) | 19.4 | 13.5 |
| 750 | 5.2 | 6 | 4.908738521 | quantitative addition after 2 kg addition (15 min) + (60 min reaction) | 19.5 | 13.3 |
| 750 | 5.2 | 6 | 4.908738521 | quantitative addition (40 min) + (60 min reaction) | 19.9 | 13.4 |
| 150 | 30 | 32 | 1.688606051 | quantitative addition (5 min)+(60 min reaction), 40 °C | 40.3 | 28.6 |
| 200 | 30 | 32 | 2.251474735 | quantitative addition (5 min)+(60 min reaction), 40 °C | 32.1 | 19.5 |
| 250 | 30 | 32 | 2.814343419 | quantitative addition (5 min)+(60 min reaction), 40 °C | 28.9 | 20.5 |
| 300 | 30 | 32 | 3.377212103 | quantitative addition (5 min)+(60 min reaction), 40 °C | 27.2 | 18.5 |

(continued)

| rpm | LiO H-H$_2$O (98.5%) | H2O$_2$ (34.5%) | T. velocity | H$_2$O$_2$ addition method and reaction time | Li$_2$O$_2$ | Li$_2$O |
|---|---|---|---|---|---|---|
| | [kg] | [kg] | [m/sec] | min | D50 [μm] | D50 [μm] |
| 350 | 30 | 32 | 3.940080786 | quantitative addition (5 min)+(60 min reaction), 40 °C | 22.7 | 15.5 |
| 400 | 30 | 32 | 4.50294947 | quantitative addition (5 min)+(60 min reaction), 40 °C | 19.5 | 13.0 |
| 450 | 30 | 32 | 5.065818154 | quantitative addition (5 min)+(60 min reaction), 40 °C | 19.5 | 13.6 |
| 500 | 30 | 32 | 5.628686838 | quantitative addition (5 min)+(60 min reaction), 40 °C | 14.9 | 10.5 |
| 500 | 45 | 50 | 5.628686838 | quantitative addition (5 min)+(60 min reaction), 40 °C | 17.0 | 10.6 |
| 500 | 60 | 64 | 5.628686838 | quantitative addition (5 min)+(60 min reaction), 40 °C | 17.2 | 10.9 |
| 500 | 30 | 32 | 5.628686838 | quantitative addition (5 min)+(60 min reaction), 50 °C | 15.3 | 10.6 |
| 500 | 30 | 32 | 5.628686838 | quantitative addition (5 min)+(60 min reaction), 30 °C | 15.8 | 10.7 |

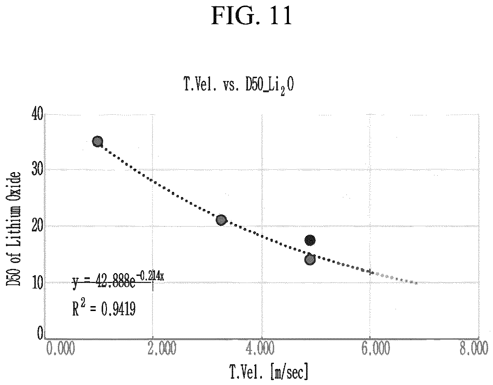

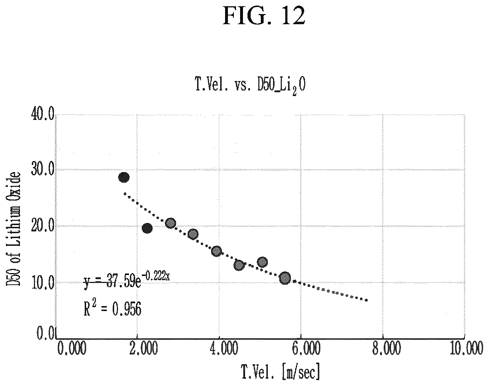

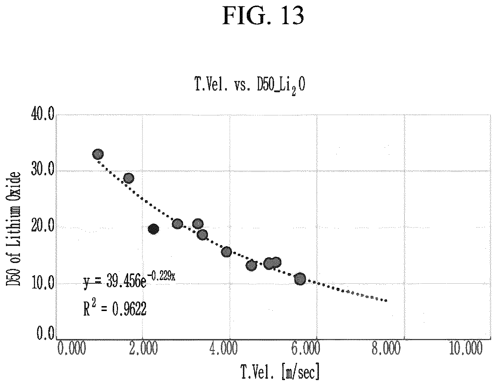

Based on the table, the relationship between the diameter of Li$_2$O and the linear velocity of the reactor during the synthesis reaction is shown as FIGS. 11 to 13. As aforementioned, since the tip velocity and the lithium oxide follow the following relationship equation, the tip velocity may be adjusted to control the diameter of the lithium oxide.

(Lithium oxide particle size) = a $\times$ exp( b $\times$ Tip velocity), wherein a and b are process constants

Herein, a and b are engineering constants and may be obtained as experimental values according to equipment.

**Example 5: Synthesis of Over-lithiated Transition Metal Oxide using Li$_2$O as Raw Material**

20 g of NiO and 8.85 g of the prepared Li$_2$O were mixed with a small blender for 5 minutes. The mixed powders were exposed in a nitrogen atmosphere furnace at 700 °C for 12 hours to synthesize Li$_2$NiO$_2$. The synthesized powders were 28.86 g.

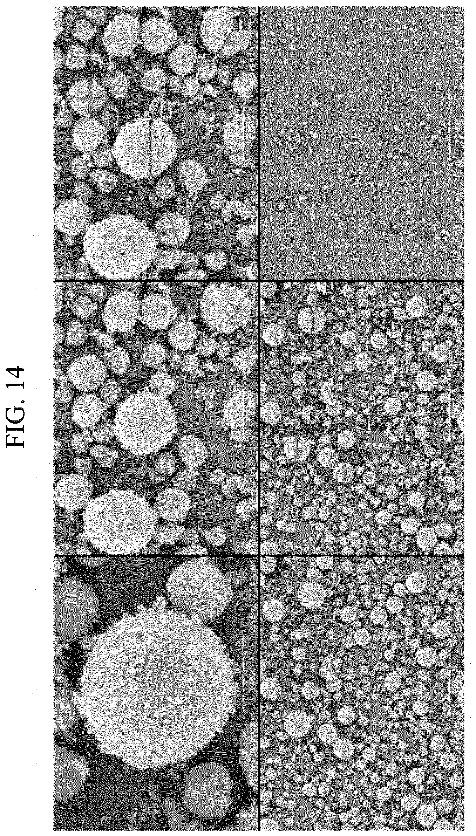

The mixture had a spherical shape, as shown in FIG. 14. Particularly, as shown in FIG. 14, pulverized Li$_2$O particulates were uniformly distributed on the surface of spherical NIO.

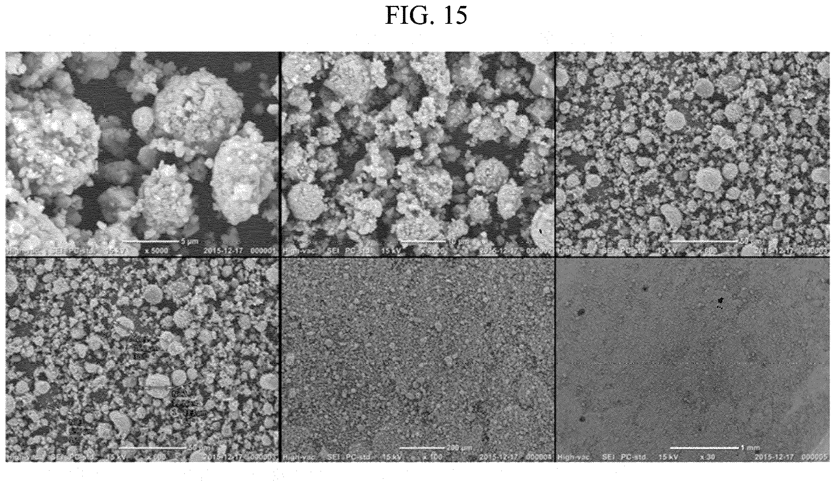

After a heat treatment at a high temperature, the synthesized Li$_2$NiO$_2$ had a shape as shown in FIG. 15. As shown in FIG. 15, spherical Li$_2$NiO$_2$ was formed, but non-reacted NiO and Li$_2$O were not found.

The prepared Li$_2$NiO$_2$ was used to manufacture a CR2032 coin cell, and electrochemical characteristics thereof were evaluated. An electrode was coated on a 14 mm-thick aluminum thin plate, and the coating layer had a thickness of 50 μm to 80 μm.

Electrode slurry was prepared by mixing Li$_2$NiO$_2$ : denka black (D.B.) : PvdF = 85:10:5 wt%, and when an electrode manufactured by using the same was vacuum-dried and compressed, a thickness of a final coating layer was 40 μm to 60 μm. The electrolyte solution was an organic solution in which a 1M concentration of LiPF$_6$ salt was dissolved in a solvent (EC:EMC = 1:2).

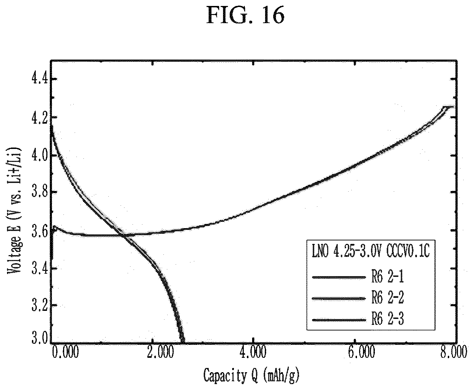

A manufactured coin cell was charged and discharged in a range of 4.25 V to 3.0 V at a 0.1 C-rate in a CC/CV mode under 1% condition. Charge and discharge curves of three coin cells are shown in FIG. 16.

The cells were three times tested with respect to charge/discharge, and each test showed the same result.

1 Red : as for average electrochemical characteristics of the coin cells, charge capacity of 389.88 mAh/g, discharge capacity of 130.99 mAh/g, irreversible capacity of 258.88 mAh/g, and reversible efficiency of 33.60% were obtained. 2 Green : as for average electrochemical characteristics of the coin cells, charge capacity of 388.19 mAh/g, discharge capacity of 130.82 mAh/g, irreversible capacity of 257.38 mAh/g, and reversible efficiency of 33.70% were obtained.

**Example 6**

100 g of NiO and 41.2 g of $Li_2O$, a developed product, were mixed with a small blender for 10 minutes. The mixed powders were exposed in a nitrogen atmosphere furnace at 700 °C for 12 hours to synthesize $Li_2NiO_2$. The synthesized powders were recovered by 140 g.

100 g of NiO and 41.2 g of $Li_2O$ purchased as a comparative material were mixed with a small mixer for 10 minutes. The mixed powders were exposed in a nitrogen atmosphere furnace at 700 °C for 12 hours to synthesize $Li_2NiO_2$. The synthesized powders were recovered by 140 g.

A particle size analysis result of the prepared powder is as follows: the developed product showed an increased diameter by 4.1 $\mu$m with a reference to D50, and Dmin and Dmax thereof were all increased. The reason is that the developed product promoted sintering effects during the LNO synthesis process.

(Table 5)

| Particle size analysis result | Dmin [$\mu$m] | D50 [$\mu$m] | Dmax [$\mu$m] |
|---|---|---|---|
| Comparative material | 4.47 | 13.23 | 39.23 |
| Developed product | 5.12 | 17.33 | 77.33 |
| Increment (Developed Product-Comparative Material) | 0.65 | 4.1 | 0.65 |
| Increment rate (Increment/Comparative Material) | 14.5% | 31.0% | 97.1% |

When XRD was measured for a phase analysis of the prepared powder, the phase analysis results are shown in Table 6. As shown in the results, when the developed product was used, a LNO phase fraction was improved by 3.6 wt%, and a residual NiO content was reduced by 2.7 wt%.

(Table 6)

| XRD phase analysis result | LNO (%) | NiO (%) | $Li_2O$ (wt%) | Sum |
|---|---|---|---|---|
| Comparative material | 90.9% | 7.6% | 1.5% | 100% |
| Developed product | 94.5% | 4.9% | 0.6% | 100% |
| Increment (Developed Product-Comparati ve Material) | 3.6% | -2.7% | -0.9% | 0.0% |
| Increment rate (Increment/Compar ative Material) | 3.9% | -35.8% | -57.0% | 0.0% |

A residual lithium amount of the prepared powders were measured in a neutralization titration method. The measured LiOH content was reduced by 58.2% from the developed product, as shown in Table 7. The $Li_2CO_3$ content was judged by denaturation according to an atmospheric exposure.

(Table 7)

| Residual lithium analysis | LiOH [wt%] | $Li_2CO_3$ [wt%] |
|---|---|---|
| Comparative material | 4.19 | 0.36 |
| Developed product | 1.75 | 0.47 |
| Increment (Developed Product-Comparative Material) | -2.44 | 0.11 |
| Increment rate (Increment/Comparative Material) | -58.2% | 30.6% |

The recovered powders were used as a raw material to manufacture a CR2032 coin cell, and electrochemical characteristics of the coin cells were evaluated. The prepared $Li_2NiO_2$ was pulverized with a mortar and then, passed through a mesh #325 to remove impurities and large particles. An electrode was coated on a 14 mm-thick aluminum thin plate. The coating layer had a thickness of 50 $\mu$m to 80 $\mu$m. Herein, electrode slurry was prepared by mixing $Li_2NiO_2$ : denka black (D.B.) : PvdF = 85:10:5 wt%, and the manufactured electrode was vacuum-dried and compressed to obtain a final coating layer having a thickness of 40 $\mu$m to 60 $\mu$m. The electrolyte solution was an organic solution in which LiPF$_6$ salt was dissolved at a concentration of 1 M in a solvent (EC:EMC=1:2).

The manufactured coin cells were charged and discharged in a range of 4.25 V to 3.0 V at a 0.1C-rate in a CC/CV mode under a 1% condition.

As shown in the results, the developed product showed improvement effects of charge capacity of 2.7%, discharge capacity of 3.6%, and irreversible capacity of 2.2%. These results showed that a LNO synthesis rate was increased by the developed product having an improved reaction rate.

(Table 8)

| CR2032 coin cell | Charge capacity | Discharge capacity | Irreversible capacity | Reversible efficiency |
|---|---|---|---|---|
| Characteristic evaluation result | [mAh/g] | [mAh/g] | [mAh/g] | [%] |
| Developed product | 414.4 | 144.5 | 269.9 | 34.9% |
| Comparative material | 403.6 | 139.5 | 264.1 | 34.6% |
| Increment (Developed Product-Comparative Material) | 10.8 | 5 | 5.8 | 0.3% |
| Increment rate (Increment/Comparative Material) | 2.7% | 3.6% | 2.2% | 0.9% |

As shown in the coin cell experiments, since a conversion rate was increased during the LNO synthesis, compared with the conventional Li$_2$O, there were effects of increasing electrochemical capacity, decreasing the residual lithium amount, and increasing material efficiency.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**Claims**

1.  A method of controlling a particle size of lithium peroxide,

    wherein the lithium peroxide is produced by reacting lithium hydroxide hydrate with hydrogen peroxide in a reactor to prepare lithium peroxide,
    a shape of the lithium peroxide is spherical,
    the particle size is determined by adjusting a tip velocity of a stirrer in the reactor, and
    the tip velocity is calculated by the equation:

    $$V\_tip = 2pi \times R\_impellor * (RPM)/60$$

    wherein, in the above equation, V-tip is a tip velocity, Pi is a circumference, R-impellor is a radius of the stirrer blade, and RPM is the number of revolutions per minute of the stirrer blade.

2.  The method of claim 1, wherein the particle size of the prepared lithium peroxide is in the range of 1 $\mu$m to 130 $\mu$m.

3.  The method of claim 1, wherein an equivalent ratio of lithium hydroxide hydrate to hydrogen peroxide is 4:1 to 1:1.

4.  The method of claim 1, wherein a reaction temperature is in the range of 30 °C to 60 °C and a reaction time is 1 minute or more, or 30 minutes to 90 minutes.

5.  A method of preparing a lithium peroxide having a controlled particle size, comprising

    (1) reacting lithium hydroxide hydrate with hydrogen peroxide to prepare lithium peroxide; and

(2) decomposing the lithium peroxide at a high temperature under an inert atmosphere to prepare lithium oxide, wherein in the (1) process, the particle size of lithium peroxide is determined by adjusting a tip velocity of a stirrer in a reactor, and

the tip velocity is calculated by the following equation:

$$V\_tip = 2pi \times R\_impellor * (RPM)/60$$

wherein, in the above equation, V-tip is a tip velocity, Pi is a circumference, R-impellor is a radius of the stirrer blade, and RPM is the number of revolutions per minute of the stirrer blade.

6.  The method of claim 5, wherein

a particle size of lithium oxide prepared in the (2) process is determined by the following equation:

$$\text{(lithium oxide particle size)} = a \times \exp(b \times V\text{-tip}),$$

wherein a and b are process constants
wherein, in the above equation, a and b are engineering constant values, $20 < a < 60$, and $-0.3 < b < -0.1$.

7.  The method of claim 5, wherein the particle size of lithium oxide prepared in the (2) process is 50 to 80%, or 60 to 70% of the particle size of lithium peroxide prepared in the (1) process.

8.  The method of claim 5, wherein the particle size of lithium oxide produced in the (2) process is 60 to 70% of the particle size of lithium peroxide produced in the (1) process.

9.  The method of claim 5, wherein in the (1) process, the tip velocity of the stirrer in the reactor is in the range of 0.2 m/sec. to 20 m/sec.

10. The method of claim 5, wherein the particle size of lithium oxide is in the range of 1 $\mu$m to 100 $\mu$m.

11. The method of claim 5, wherein the faster the tip velocity, the smaller the size of the produced particles.

12. The method of claim 5, wherein in the (2) process, a reaction temperature is greater than or equal to 300 °C.

13. The method of claim 5, wherein a reaction time of the (2) process is greater than or equal to 10 minutes, or 30 minutes to 3 hours.

FIG. 1

1st step  Wet Reaction

2nd step  High-temperature
Conversion Reaction

H₂O₂

LiOH → Chemical Conversion → Filtration/Drying → Li₂O₂ → Low PO₂ Conversion → Classi-fication → Li₂O

LiOH solution

FIG. 2

# FIG. 3

T.Vel. vs. $D50\_Li_2O_2$

$$y = 61.269e^{-0.214x}$$

$$R^2 = 0.9419$$

# FIG. 4

T.Vel. vs. D50_Li$_2$O$_2$

$y = 55.151e^{-0.219x}$

$R^2 = 0.9727$

FIG. 5

T.Vel. vs. D50_$Li_2O_2$

$y = 57.802e^{-0.226x}$

$R^2 = 0.9763$

D50 of Lithium Peroxide

T.Vel. [m/sec]

FIG. 6

FIG. 7

FIG. 8

FIG. 9

FIG. 10

Position [° 2θ] (Copper (Cu))

# FIG. 11

T.Vel. vs. D50_Li$_2$O

$y = 42.888e^{-0.214x}$

$R^2 = 0.9419$

# FIG. 12

T.Vel. vs. D50_$Li_2O$

$y = 37.59e^{-0.222x}$

$R^2 = 0.956$

D50 of Lithium Oxide

T.Vel. [m/sec]

## FIG. 13

T.Vel. vs. $D50\_Li_2O$

$y = 39.456e^{-0.229x}$

$R^2 = 0.9622$

(y-axis) D50 of Lithium Oxide

(x-axis) T.Vel. [m/sec]

FIG. 14

FIG. 15

EP 4 079 683 A2

FIG. 16

**EP 4 079 683 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190172033